# EUROPÄISCHE PATENTANMELDUNG

(11) **EP 1 847 374 A1**
(43) Veröffentlichungstag der Anmeldung: **24.10.2007**
(21) Anmeldenummer: 07005684.1
(22) Anmeldetag: 20.03.2007
(51) Int. Cl.: B29C 47/90, B29C 47/12, B29C 49/04

(54) **Vorrichtung zum Formen der Innenoberfläche eines Rohres aus thermoplastischem Material**

(30) Priorität: 20.04.2006 DE 102006018373
(71) Anmelder: Drossbach GmbH & Co. KG, 86641 Rain am Lech (DE)
(72) Erfinder: Haberle, Adalbert, 86641 Rain am Lech (DE); Kellner, Michael, Dipl.-Ing., 86641 Rain/Sallach (DE); Hetzner, Claus, 90513 Zirndorf (DE)
(74) Vertreter: Altenburg, Udo

(57) **Zusammenfassung**

Die vorliegende Erfindung betrifft eine Vorrichtung zum Formen der Innenoberfläche (8) eines Rohres (9) aus thermoplastischem Material, welche ein Formbauteil (1) umfasst. Erfindungsgemäß weist die Oberfläche (3) dieses Formbauteils (1) mindestens eine Nut (4) und mindestens einen glatten zusammenhängenden Oberflächenbereich auf. Insbesondere weist das Formbauteil (1) zumindest teilweise eine zylinderförmige und/oder zumindest teilweise konische Form auf. Die Nut bzw. die Nuten (4) kann bzw. können in Umfangsrichtung geschlossen oder spiralförmig verlaufen und sich entweder über die gesamte Länge des Formbauteils (1) erstrecken oder nur auf einer bestimmten Länge des Formbauteils (1) angeordnet sein. Die Nut bzw. die Nuten (4) kann bzw. können mit einem Drucksystem in Verbindung stehen zur Erzeugung von Unterdruck/Vakuum und/oder Überdruck in der Nut (4). Es wird somit ein verbessertes Führen und Gleiten der Innenoberfläche (8) des Rohres (9) auf dem Formbauteil (1) erreicht. Die vorliegende Erfindung betrifft außerdem eine Anlage zur Herstellung von Rohren (9) aus thermoplastischem Material, welche eine derartige Vorrichtung zum Formen der Innenoberfläche (8) eines Rohres (9) aus thermoplastischem Material umfasst.

## Beschreibung

### Technisches Gebiet

Die vorliegende Erfindung betrifft eine Vorrichtung zum Formen der Innenoberfläche eines Rohres aus thermoplastischem Material, welche ein Formbauteil umfasst. Die vorliegende Erfindung betrifft außerdem eine Anlage zur Herstellung von Rohren aus thermoplastischem Material, welche eine derartige Vorrichtung zum Formen der Innenoberfläche eines Rohres aus thermoplastischem Material umfasst.

### Stand der Technik

Rohre aus thermoplastischem Material, welche eine Innen- und eine Außenoberfläche umfassen und meist einen kreisförmigen Querschnitt aufweisen, können mit Hilfe von so genannten Corrugatoren hergestellt werden. Diese thermoplastischen Rohre können verschiedenste Durchmesser aufweisen, beispielsweise einen relativ großen Durchmesser im Bereich von einem bis zwei Metern, wie bei der Herstellung von Abwasserrohren benötigt.

Im Stand der Technik sind Anlagen zur Herstellung von Rohren aus thermoplastischem Material bekannt, welche neben einer Vorrichtung zum Formen der Innenoberfläche eines Rohres aus thermoplastischem Material mit einem Formbauteil (auch "Kalibrierung" genannt), ein Düsenbauteil zum Zuführen bzw. Extrudieren mindestens eines thermoplastischen Materialstromes sowie Formbacken zum Formen der Außenoberfläche umfassen können.

### Zusammenfassung der Erfindung

Die Aufgabe der vorliegenden Erfindung ist es, eine Vorrichtung zum Formen der Innenoberfläche eines Rohres aus thermoplastischem Material derart weiterzuentwickeln, dass ein verbessertes Führen und Gleiten der Innenoberfläche des Rohres auf dem Formbauteil erreicht wird.

Diese Aufgabe wird durch eine Vorrichtung gemäß Patentanspruch 1 gelöst. Die abhängigen Patentansprüche enthalten vorteilhafte Ausgestaltungen der Erfindung.

Die Vorrichtung zum Formen der Innenoberfläche eines Rohres aus thermoplastischem Material umfasst nach vorliegender Erfindung ein Formbauteil mit einer Längsachse. Erfindungsgemäß weist die Oberfläche dieses Formbauteils mindestens eine Nut und mindestens einen glatten zusammenhängenden Oberflächenbereich auf. Insbesondere weist das Formbauteil zumindest teilweise eine zylinderförmige und/oder zumindest teilweise konische Form auf

Es wird ausdrücklich darauf hingewiesen, dass das Formbauteil selbstverständlich beliebig viele Nuten aufweisen kann. Zur Vereinfachung wird im Weiteren jedoch nur noch eine Nut bzw. eine erste und eine zweite Nut beschrieben. Entsprechende Ausführungsformen können jedoch natürlich auch für eine oder mehrere weitere Nuten auf der Oberfläche des Formbauteils gelten.

Die Nut kann mit einem Drucksystem in Verbindung stehen zur Erzeugung von Unterdruck/Vakuum und/oder Überdruck in der Nut, um die Formgenauigkeit der Innenoberfläche des Rohres aus thermoplastischem Material bzw. die Reibung der Innenoberfläche des Rohres auf dem Formbauteil kontrollieren und gegebenenfalls verändern zu können. Eine Unterbrechung des Formbauteils, d.h. eine Veränderung der Geometrie des Formbauteils, ist dafür nicht notwendig.

Die Nut kann in Umfangsrichtung geschlossen oder spiralförmig verlaufen und sich entweder über die gesamte Länge des Formbauteils erstrecken oder nur auf einer bestimmten Länge des Formbauteils angeordnet sein. Unter in Umfangsrichtung geschlossen wird verstanden, dass die Nut geschlossen um das meist zylinderförmige Formbauteil verläuft und somit im Querschnitt des Formbauteils eine Kreisform darstellt. Unter spiralförmig wird verstanden, dass die Nut spiralförmig um das meist zylinderförmige Formbauteil verläuft und somit zwei nicht miteinander verbundenen Enden aufweist.

Die Oberfläche des Formbauteils kann eine zweite Nut aufweisen, welche ebenfalls in Umfangsrichtung geschlossen oder spiralförmig verlaufen und sich entweder über die gesamte Länge des Formbauteils erstrecken oder nur auf einer bestimmten Länge des Formbauteils angeordnet sein kann.

In einer Ausführungsform der vorliegenden Erfindung können die erste Nut und die zweite Nut beide spiralförmig verlaufen. Die beiden Nuten können dabei ineinander gewunden sein bzw. in Umfangsrichtung verlaufen ohne sich zu kreuzen, wobei die Nuten insbesondere in Umfangsrichtung parallel verlaufen. Insbesondere kann die Oberfläche genau vier derart ineinander gewundene spiralförmige Nuten aufweisen

In einer weiteren Ausführungsform können die erste und die zweite Nut in Bezug auf die Längsachse des Formbauteils hinter bzw. nebeneinander angeordnet sein. Insbesondere kann die erste Nut in Umfangsrichtung geschlossen verlaufen. Es können natürlich auch mehrere derartig in Umfangsrichtung geschlossene Nuten hintereinander angeordnet sein. Die zweite Nut kann spiralförmig verlaufen und in Bezug auf die Längsachse des Formbauteils hinter der ersten Nut angeordnet sein, d.h. weiter entfernt von dem Düsenbauteil als die erste Nut. Alternativ kann die Anordnung der beiden Nuten in Bezug auf die Längsachse des Formbauteils auch vertauscht werden, so dass die zweite spiralförmige Nut näher an dem Düsenbauteil angeordnet ist als die erste in Umfangsrichtung verlaufende Nut.

In einer anderen Ausführungsform können die erste und zweite Nut beide spiralförmig verlaufen und in Bezug auf die Längsachse des Formbauteils hinter bzw. nebeneinander angeordnet sein. Die Breite der glatten zusammenhängenden Oberflächenbereiche der beiden Nuten kann dabei jeweils unterschiedlich sein, d.h. die spiralförmigen Nuten können unterschiedlich "dicht" um das Formbauteil verlaufen.

Die Vorrichtung weist mindestens einen Anschluss zur Verbindung mit einem Drucksystem auf, welcher mit mindestens einer Nut des Formbauteils verbunden ist. Insbesondere können Bohrungen unter einem Winkel in die mindestens eine Nut des Formbauteils gesetzt werden zur Verbindung mit dem Drucksystem.

Das Drucksystem kann ein System zur Erzeugung eines Überdrucks umfassen. Dieses Drucksystem kann mit mindestens einem der Anschlüsse in Verbindung stehen, um in mindestens einer Nut einen Überdruck zu erzeugen, wobei der Überdruck insbesondere zum Wegdrängen des thermoplastischen Materials von der Oberfläche des Formbauteils verwendet werden kann. Die Innenoberfläche des Rohres kann so auf einem "Luftpolster" gleiten, welches sich zwischen der Oberfläche des Formbauteils und dem thermoplastischen Material bildet. Dadurch wird die Anpresskraft des thermoplastischen Materials auf das Formbauteil verringert oder aufgehoben und die Reibungskräfte zwischen der Innenoberfläche des Rohres und dem Formbauteil reduziert. Außerdem kann so ein Abkühlen des thermoplastischen Materials erreicht werden. Vorzugsweise erzeugt das Drucksystem einen nur leichten Überdruck, insbesondere beträgt der Überdruck weniger als 0,5 bar, insbesondere etwa 0,1 bar.

Alternativ oder kumulativ kann das Drucksystem ein System zur Erzeugung eines Unterdrucks bzw. Vakuums aufweisen. Dieses Drucksystem kann mit mindestens einem der Anschlüsse in Verbindung stehen, um in mindestens einer Nut einen Unterdruck bzw. ein Vakuum zu erzeugen, wobei der Unterdruck bzw. das Vakuum insbesondere zum Ansaugen des thermoplastischen Materials an die Oberfläche des Formbauteils verwendet werden kann. Dadurch kann die Formgenauigkeit der Innenoberfläche des Rohres aus thermoplastischem Material auf dem Formbauteil verbessert werden.

In einer weiteren Alternative können die Nuten auch zeitlich wechselnd mit Unterdruck/Vakuum bzw. Überdruck versorgt werden.

Vorzugsweise wird eine dem Düsenbauteil näher liegende Nut mit Unterdruck bzw. Vakuum versorgt, um das Material anzusaugen und dicht am Formbauteil zu führen. Eine weiter entfernte Nut kann mit Überdruck versorgt werden, damit das abkühlende, aber noch weiche Material sich nicht in der Nut ablagern und dadurch zur Verschleppung der Innenoberfläche des Rohres führen kann.

Um das Drucksystem mit den Nuten zu verbinden, kann das Düsenbauteil mindestens einen Zufuhrkanal, insbesondere zwei Zufuhrkanäle, umfassen, über welche Unterdruck/Vakuum bzw. Überdruck zu mindestens einem der Anschlüsse geführt werden kann.

Eine derartige erfindungsgemäße Vorrichtung zum Formen der Innenoberfläche eines Rohres aus thermoplastischem Material kann nach einer der oben beschriebenen Ausführungsformen in einer Anlage zur Herstellung von Rohren aus thermoplastischem Material eingesetzt werden. Die Anlage umfasst weiterhin ein Düsenbauteil zum Zuführen bzw. Extrudieren mindestens eines thermoplastischen Materialstromes sowie Formbacken zum Formen der Außenoberfläche.

Das Düsenbauteil kann einen äußeren Düsendorn und einen inneren Düsendorn aufweisen mit mindestens einem dazwischen liegenden Düsenkanal, der an einem Düsenspalt endet. Der Düsenkanal kann dabei jeweils einen thermoplastischen Materialstrom führen.

Die Anlage kann konstruiert sein zur Herstellung von doppelwandigen Rohren aus thermoplastischem Material, welche jeweils ein Innenrohr und ein Außenrohr umfassen. Dabei umfasst das Düsenbauteil einen Düsendorn mit zwei dazwischen liegenden und gegeneinander abgegrenzten Düsenkanälen. Ein erster Düsenkanal kann einen ersten Materialstrom führen und ein zweiter Düsenkanal kann einen zweiten Materialstrom führen, wobei der erste Düsenkanal an einem ersten Düsenspalt und der zweite Düsenkanal an einem zweiten Düsenspalt endet. Das Innenrohr wird durch den ersten Düsenkanal fließenden und an dem ersten Düsenspalt austretenden ersten Materialstrom gebildet Das Außenrohr wird durch den durch den zweiten Düsenkanal fließenden und an dem zweiten Düsenspalt austretenden zweiten Materialstrom gebildet wird. Dabei ist der erste Düsenspalt entlang der Längsachse in Flussrichtung des Materials hinter dem zweiten Düsenspalt angeordnet, d.h. weiter entfernt vom Düsenbauteil als der zweite Düsenspalt. Dadurch wird erreicht, dass der zweite Materialstrom, der das Außenrohr bildet, in Flussrichtung des Materials vor dem ersten Materialstrom, der das Innenrohr bildet, austritt.

Insbesondere kann die Anlage konstruiert sein zur Herstellung eines doppelwandiges Wellrohres, welches ein glattes Innenrohr und ein gewelltes Außenrohr. Das glatte Innenrohr kann durch eine an einem ersten Düsenspalt austretenden Materialstrom gebildet werden. Die Formbacken können eine gewellte Innenseite aufweisen, die das Außenrohr formen. Die so entstandenen inneren Falten des Außenrohres können mit dem glatten Innenrohr verbunden werden, so dass sich Hohlräume zwischen Außen- und Innenrohr bilden.

Die Anlage kann weiterhin ein entlang der Längsachse in Flussrichtung des Materials vor dem Düsenbauteil angeordnetes Verteilerbauteil zum Zuführen des mindestens einen thermoplastischen Materialstromes zu dem Düsenbauteil aufweisen.

### Kurzbeschreibung der Zeichnungen

Die vorliegende Erfindung wird nachfolgend anhand bevorzugter Ausführungsformen unter Bezug auf die beigefügten Zeichnungen erläutert.
- **Fig.**: **1** zeigt eine Vorrichtung zum Formen der Innenoberfläche eines Rohres aus thermoplastischem Material nach einer ersten Ausführungsform der vorliegenden Erfindung sowie einen Teil der Anlage zur Herstellung von Rohren aus thermoplastischem Material;
- **Fig. 2**: zeigt eine Vorrichtung zum Formen der Innenoberfläche eines Rohres aus thermoplastischem Material nach einer zweiten Ausführungsform der vorliegenden Erfindung sowie einen Teil der Anlage zur Herstellung von Rohren aus thermoplastischem Material;
- **Fig. 3**: zeigt eine Vorrichtung zum Formen der Innenoberfläche eines Rohres aus thermoplastischem Material nach einer dritten Ausführungsform der vorliegenden Erfindung sowie einen Teil der Anlage zur Herstellung von Rohren aus thermoplastischem Material;
- **Fig. 4**: zeigt eine Vorrichtung zum Formen der Innenoberfläche eines Rohres aus thermoplastischem Material nach einer vierten Ausführungsform der vorliegenden Erfindung sowie einen Teil der Anlage zur Herstellung von Rohren aus thermoplastischem Material;
- **Fig. 5**: zeigt eine Vorrichtung zum Formen der Innenoberfläche eines Rohres aus thermoplastischem Material nach einer fünften Ausführungsform der vorliegenden Erfindung sowie einen Teil der Anlage zur Herstellung von Rohren aus thermoplastischem Material.

### Detaillierte Beschreibung der Zeichnungen

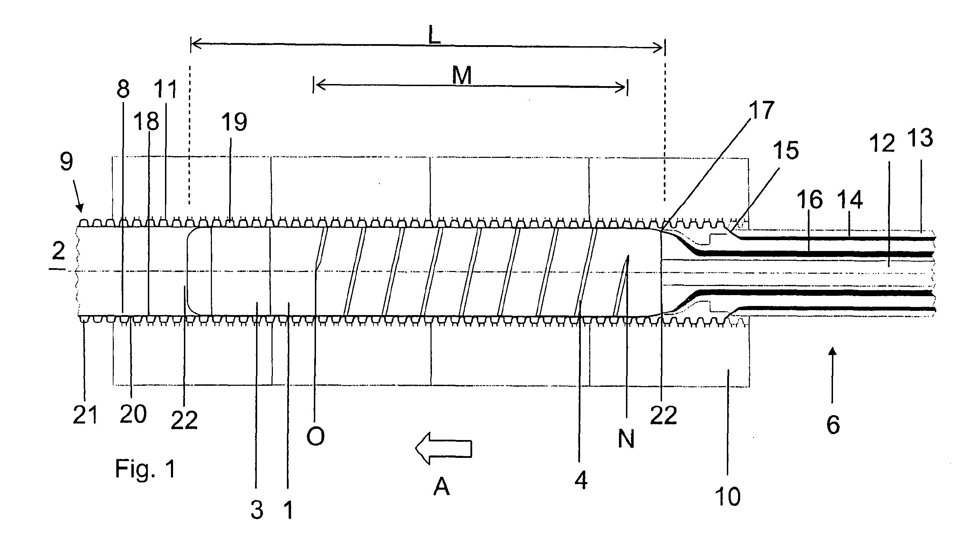

Die in **Fig. 1** dargestellte Vorrichtung zum Formen der Innenoberfläche eines Rohres aus thermoplastischem Material umfasst nach vorliegender Erfindung ein Formbauteil **1** mit einer Längsachse **2.** Erfindungsgemäß weist die Oberfläche **3** dieses Formbauteils mindestens eine Nut **4** und mindestens einen glatten zusammenhängenden Oberflächenbereich auf. Das Formbauteil **1** weist in seinem mittleren Bereich eine zylinderförmige Form auf und verläuft an seinen Querseiten **22** konisch.

In der in **Fig. 1** dargestellten ersten Ausführungsform verläuft die Nut **4** in Umfangsrichtung spiralförmig und erstreckt sich nicht über die gesamte Länge **L** des Formbauteils **1,** sondern ist nur auf einer bestimmten Länge **M** des Formbauteils **1** angeordnet. Unter spiralförmig wird verstanden, dass die Nut **4** spiralförmig um das zylinderförmige Formbauteil **1** verläuft und somit zwei nicht miteinander verbundene Enden, einen Anfangspunkt **N** und einen Endpunkt **O,** aufweist.

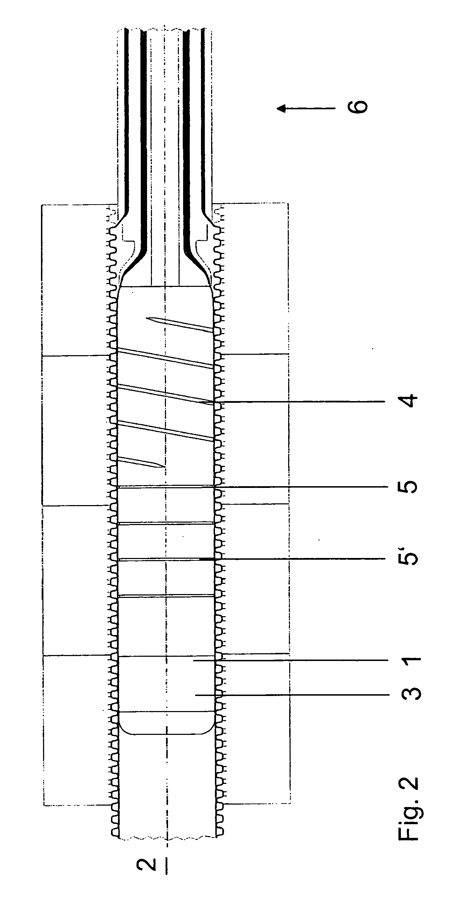

In **Fig. 2** weist die Oberfläche **3** des Formbauteils **1** eine erste Nut **4** und eine zweite Nut **5** auf, wobei die Nut **5** in Umfangsrichtung geschlossen verläuft. Unter in Umfangsrichtung geschlossen wird verstanden, dass die Nut **5** geschlossen um das zylinderförmige Formbauteil **1** verläuft und somit im Querschnitt des Formbauteils **1** eine Kreisform darstellt. In der in **Fig. 2** dargestellten zweiten Ausführungsform der vorliegenden Erfindung sind die erste Nut **4** und die zweite Nut **5** in Bezug auf die Längsachse **2** des Formbauteils 1 hinter bzw. nebeneinander angeordnet. Die zweite Nut **5** ist in Bezug auf die Längsachse **2** des Formbauteils **1** hinter der ersten Nut **4** angeordnet, d.h. weiter entfernt von einem Düsenbauteil **6** als die erste Nut **4.** In Bezug auf die Längsachse **2** des Formbauteils **1** sind hinter der zweiten Nut **5** drei weitere ebenfalls in Umfangsrichtung geschlossene Nuten **5'** angeordnet.

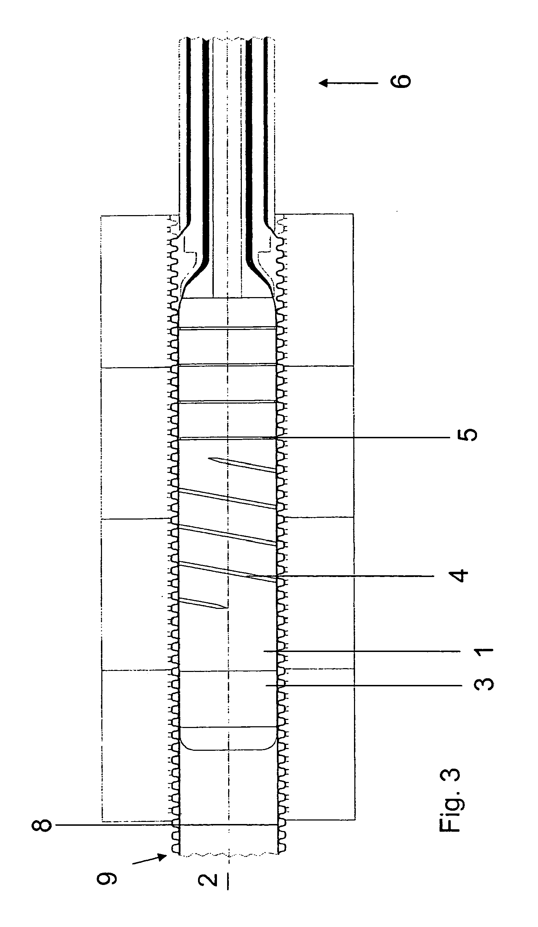

Alternativ kann die Anordnung der beiden Nuten **4** und **5** in Bezug auf die Längsachse **2** des Formbauteils **1** auch vertauscht werden, so dass die zweite in Umfangsrichtung verlaufende Nut **5** näher an dem Düsenbauteil **6** angeordnet ist als die erste spiralförmig verlaufende Nut **4** (siehe **Fig. 3**).

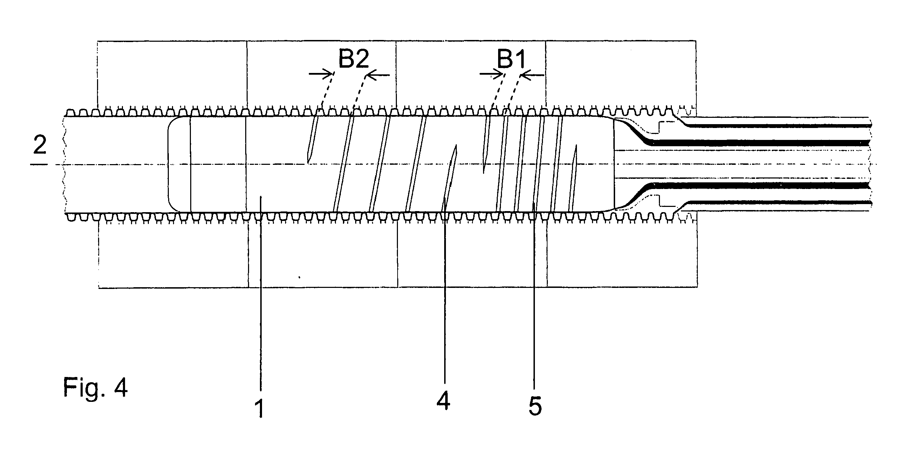

In einer vierten in **Fig. 4** dargestellten Ausführungsform verlaufen die erste Nut **4** und zweite Nut **5** beide spiralförmig und sind in Bezug auf die Längsachse **2** des Formbauteils **1** hinter bzw. nebeneinander angeordnet. Die Breite **(B1, B2)** der glatten zusammenhängenden Oberflächenbereiche der beiden Nuten **(4, 5)** ist dabei jeweils unterschiedlich, d.h. die spiralförmigen Nuten **(4, 5)** verlaufen unterschiedlich "dicht" um das Formbauteil **1.**

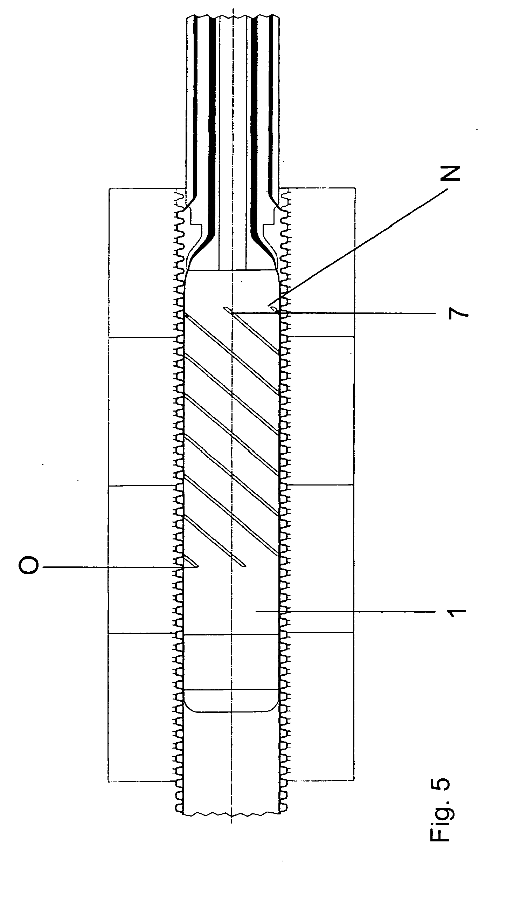

In der in **Fig. 5** dargestellte fünften Ausführungsform der vorliegenden Erfindung stellt weist die Oberfläche des Formbauteils sechs Nuten auf, die alle spiralförmig verlaufen. Die Nuten sind dabei ineinander gewunden bzw. verlaufen in Umfangsrichtung ohne sich zu kreuzen, wobei die Nuten in Umfangsrichtung parallel verlaufen. Dabei sind nur die Anfangspunkte **N** von drei der sechs Nuten auf der dem Betrachter zugewandten Längsseite des Formbauteils **1** dargestellt. Die Anfangspunkte der entsprechenden anderen drei Nuten befinden sich auf der der gegenüberliegenden Längsseite des Formbauteils **1**.

Die Vorrichtung weist mindestens einen Anschluss zur Verbindung mit einem Drucksystem auf, welcher mit mindestens einer Nut des Formbauteils **1** verbunden ist. Hierzu können, wie in **Fig. 5** dargestellt, Bohrungen **7** unter einem Winkel in die mindestens eine Nut des Formbauteils **1** gesetzt werden zur Verbindung mit dem Drucksystem.

Die in **Fig. 1** bis **Fig. 5** dargestellten Nuten können jeweils mit einem Drucksystem in Verbindung stehen zur Erzeugung von Unterdruck/Vakuum und/oder Überdruck in der jeweiligen Nut. Eine Unterbrechung des Formbauteils, d.h. eine Veränderung der Geometrie des Formbauteils, ist dafür nicht notwendig.

Das Drucksystem kann ein System zur Erzeugung eines Überdrucks umfassen, das mit einem Anschluss in Verbindung steht, um in der Nut **4** einen Überdruck zu erzeugen, wobei der Überdruck insbesondere zum Wegdrängen des thermoplastischen Materials von der Oberfläche **3** des Formbauteils **1** verwendet werden kann (siehe **Fig. 1**). Die Innenoberfläche **8** des Rohres **9** kann so auf einem "Luftpolster" gleiten, welches sich zwischen der Oberfläche **3** des Formbauteils **1** und dem thermoplastischen Material bildet. Dadurch wird die Anpresskraft des thermoplastischen Materials auf das Formbauteil **1** verringert oder aufgehoben und die Reibungskräfte zwischen der Innenoberfläche **8** des Rohres **9** und dem Formbauteil **1** reduziert. Außerdem kann so ein Abkühlen des thermoplastischen Materials erreicht werden. Vorzugsweise erzeugt das Drucksystem einen nur leichten Überdruck, insbesondere beträgt der Überdruck weniger als 0,5 bar, insbesondere etwa 0,1 bar.

Alternativ oder kumulativ kann das Drucksystem ein System zur Erzeugung eines Unterdrucks bzw. Vakuums aufweisen, das mit einem Anschluss in Verbindung steht, um in der Nut **4** einen Unterdruck bzw. ein Vakuum zu erzeugen, wobei der Unterdruck bzw. das Vakuum insbesondere zum Ansaugen des thermoplastischen Materials an die Oberfläche **3** des Formbauteils **1** verwendet werden kann. Dadurch kann die Formgenauigkeit der Innenoberfläche **8** des Rohres **9** aus thermoplastischem Material auf dem Formbauteil **1** verbessert werden.

In einer weiteren Alternative kann die Nut **4** auch zeitlich wechselnd mit Unterdruck/Vakuum bzw. Überdruck versorgt werden.

In der in **Fig. 3** dargestellten Ausführungsform kann die dem Düsenbauteil **6** näher liegende zweite Nut **5** vorzugsweise mit Unterdruck bzw. Vakuum versorgt werden, um das Material anzusaugen und dicht am Formbauteil **1** zu führen. Die weiter entfernte erste Nut **4** kann vorzugsweise mit Überdruck versorgt werden, damit das abkühlende, aber noch weiche Material sich nicht in der Nut **4** ablagern und dadurch zur Verschleppung der Innenoberfläche **8** des Rohres **9** führen kann.

Eine derartige erfindungsgemäße Vorrichtung zum Formen der Innenoberfläche **8** eines Rohres **9** aus thermoplastischem Material kann nach einer Ausführungsformen der vorliegenden Erfindung in einer Anlage zur Herstellung von Rohren aus thermoplastischem Material eingesetzt werden. Die Anlage umfasst weiterhin das Düsenbauteil **6** zum Zuführen bzw. Extrudieren mindestens eines thermoplastischen Materialstromes sowie Formbacken **10** zum Formen der Außenoberfläche **11.**

Die Anlage kann konstruiert sein zur Herstellung von doppelwandigen Rohren aus thermoplastischem Material, welche jeweils ein Innenrohr **18** und ein Außenrohr **19** umfassen (siehe **Fig. 1**). Dabei umfasst das Düsenbauteil **6** einen äußeren Düsendom **12** und eine inneren Düsendorn **13** mit zwei dazwischen liegenden und gegeneinander abgegrenzten Düsenkanälen **(14, 16).** Ein erster Düsenkanal **14** kann einen ersten Materialstrom führen und ein zweiter Düsenkanal **16** kann einen zweiten Materialstrom führen, wobei der erste Düsenkanal **14** an einem ersten Düsenspalt **15** und der zweite Düsenkanal **16** an einem zweiten Düsenspalt **17** endet. Das Innenrohr **18** wird durch den ersten Düsenkanal **14** fließenden und an dem ersten Düsenspalt **15** austretenden ersten Materialstrom gebildet. Das Außenrohr **19** wird durch den durch den zweiten Düsenkanal **16** fließenden und an dem zweiten Düsenspalt **17** austretenden zweiten Materialstrom gebildet. Dabei ist der erste Düsenspalt **15** entlang der Längsachse **2** in Flussrichtung **A** des Materials hinter dem zweiten Düsenspalt **17** angeordnet, d.h. weiter entfernt vom Düsenbauteil **6** als der zweite Düsenspalt **17.** Dadurch wird erreicht, dass der zweite Materialstrom, der das Außenrohr **19** bildet, in Flussrichtung **A** des Materials vor dem ersten Materialstrom, der das Innenrohr **18** bildet, austritt.

Insbesondere kann die Anlage konstruiert sein zur Herstellung eines doppelwandigen Wellrohres, welches ein glattes Innenrohr **18** und ein gewelltes Außenrohr **19** aufweist, wie in **Fig. 1** dargestellt. Das glatte Innenrohr **18** wird durch den an dem ersten Düsenspalt **15** austretenden Materialstrom gebildet. Die Formbacken **10** weisen eine gewellte Innenseite auf, um das Außenrohr **19** zu formen. Die so entstandenen inneren Falten **20** des Außenrohres können mit dem glatten Innenrohr **18** verbunden werden, so dass sich Hohlräume **21** zwischen Außen- **19** und Innenrohr **18** bilden.

Die Anlage kann weiterhin ein entlang der Längsachse **2** in Flussrichtung **A** des Materials vor dem Düsenbauteil **6** angeordnetes Verteilerbauteil (nicht dargestellt) zum Zuführen des mindestens einen thermoplastischen Materialstromes zu dem Düsenbauteil **6** aufweisen.

Um das Drucksystem mit den Nuten zu verbinden, kann das Düsenbauteil **6** mindestens einen Zufuhrkanal (nicht dargestellt), insbesondere zwei Zufuhrkanäle, umfassen, über welche Unterdruck/Vakuum bzw. Überdruck zu mindestens einem der Anschlüsse geführt werden kann.

## Patentansprüche

1. Vorrichtung zum Formen der Innenoberfläche eines Rohres aus thermoplastischem Material, wobei die Vorrichtung ein Formbauteil mit einer Längsachse umfasst,
**dadurch gekennzeichnet, dass** die Oberfläche des Formbauteils mindestens eine Nut und mindestens einen glatten zusammenhängenden Oberflächenbereich aufweist.

2. Vorrichtung gemäß Anspruch 1, **dadurch gekennzeichnet, dass** das Formbauteil zumindest teilweise eine zylinderförmige und/oder zumindest teilweise konische Form aufweist.

3. Vorrichtung gemäß einem der Ansprüche 1 oder 2, **dadurch gekennzeichnet, dass** eine erste Nut in Umfangsrichtung geschlossen oder spiralförmig verläuft.

4. Vorrichtung gemäß einem der Ansprüche 1 oder 2, **dadurch gekennzeichnet, dass** mindestens eine zweite Nut in Umfangsrichtung geschlossen oder spiralförmig verläuft.

5. Vorrichtung gemäß Anspruch 4, **dadurch gekennzeichnet, dass** die erste und die mindestens zweite Nut in Bezug auf die Längsachse des Formbauteils hinter bzw. nebeneinander angeordnet sind.

6. Vorrichtung gemäß Ansprüchen 3 und 4, **dadurch gekennzeichnet, dass** die erste Nut und die mindestens zweite Nut derart spiralförmig verlaufen, dass beide ineinander gewunden sind bzw. in Umfangsrichtung verlaufen ohne sich zu kreuzen, wobei die Nuten insbesondere in Umfangsrichtung parallel verlaufen.

7. Vorrichtung gemäß einem der vorhergehenden Ansprüche, **gekennzeichnet durch** mindestens einen Anschluss zur Verbindung mit einem Drucksystem.

8. Vorrichtung gemäß Anspruch 7, **dadurch gekennzeichnet, dass** mindestens ein Anschluss mit mindestens einer Nut des Formbauteils verbunden ist.

9. Vorrichtung gemäß Anspruch 8, **dadurch gekennzeichnet, dass** das Drucksystem ein System zur Erzeugung eines Überdrucks umfasst, das mit einem ersten Anschluss in Verbindung steht, um in der ersten Nut einen Überdruck zu erzeugen, wobei der Überdruck insbesondere zum Wegdrängen des thermoplastischen Materials von der Oberfläche des Formbauteils verwendet werden kann.

10. Vorrichtung gemäß Anspruch 8, **dadurch gekennzeichnet, dass** das Drucksystem ein System zur Erzeugung eines Unterdrucks bzw. Vakuums umfasst, das mit mindestens einem zweiten Anschluss in Verbindung steht, um in der mindestens zweiten Nut einen Unterdruck bzw. ein Vakuum zu erzeugen, wobei der Unterdruck bzw. das Vakuum insbesondere zum Ansaugen des thermoplastischen Materials an die Oberfläche des Formbauteils verwendet werden kann.

11. Anlage zur Herstellung von Rohren aus thermoplastischem Material, welche eine Innen- und eine Außenoberfläche umfassen, wobei die Anlage ein Düsenbauteil zum Zuführen bzw. Extrudieren mindestens eines thermoplastischen Materialstromes und Formbacken zum Formen der Außenoberfläche umfasst,
**gekennzeichnet durch** eine Vorrichtung zum Formen der Innenoberfläche eines Rohres aus thermoplastischem Material gemäß einem der Ansprüche 1 bis 10.

12. Anlage gemäß Anspruch 11, **dadurch gekennzeichnet, dass** das Düsenbauteil einen äußeren Düsendorn und einen inneren Düsendorn aufweist mit mindestens einem dazwischen liegenden Düsenkanal, der an einem Düsenspalt endet, zum Führen des mindestens einen thermoplastischen Materialstromes.

13. Anlage gemäß Anspruch 11, **dadurch gekennzeichnet, dass** das Düsenbauteil einen äußeren Düsendorn und einen inneren Düsendorn aufweist mit zwei dazwischen liegenden und gegeneinander abgegrenzten Düsenkanälen, nämlich einem ersten Düsenkanal zum Führen eines ersten Materialstromes und einem zweiten Düsenkanal zum Führen eines zweiten Materialstromes, wobei der erste Düsenkanal an einem ersten Düsenspalt und der zweite Düsenkanal an einem zweiten Düsenspalt endet.

14. Anlage gemäß Anspruch 13, **dadurch gekennzeichnet, dass**, die Anlage konstruiert ist zur Herstellung von doppelwandigen Rohren aus thermoplastischem Material, welche jeweils ein Innenrohr und ein Außenrohr umfassen.

15. Anlage gemäß Anspruch 14, **dadurch gekennzeichnet, dass**, das Innenrohr durch den ersten Düsenkanal fließenden und an dem ersten Düsenspalt austretenden ersten Materialstrom gebildet wird, und das Außenrohr durch den durch den zweiten Düsenkanal fließenden und an dem zweiten Düsenspalt austretenden zweiten Materialstrom gebildet wird.

16. Anlage gemäß Anspruch 15, **dadurch gekennzeichnet, dass**, der erste Düsenspalt entlang der Längsachse in Flussrichtung des Materials hinter dem zweiten Düsenspalt liegt.

17. Anlage gemäß einem der Ansprüche 14 bis 16, **dadurch gekennzeichnet, dass** die Anlage konstruiert ist zur Herstellung eines doppelwandiges Wellrohres, welches ein glattes Innenrohr und ein gewelltes Außenrohr, das durch Formbacken mit gewellter Innenseite geformt werden kann, umfasst, wobei die inneren Falten des Außenrohres mit dem glatten Innenrohr verbunden werden können, so dass sich Hohlräume zwischen Außen- und Innenrohr bilden können.

18. Anlage gemäß einem der Ansprüche 14 bis 17, **dadurch gekennzeichnet, dass** das Düsenbauteil mindestens einen Zufuhrkanal, insbesondere zwei Zufuhrkanäle, umfasst, über welche Unterdruck/Vakuum bzw. Überdruck zu mindestens einem der Anschlüsse geführt werden kann.

19. Anlage gemäß einem der Ansprüche 14 bis 18, **dadurch gekennzeichnet, dass**, die Anlage weiterhin ein entlang der Längsachse in Flussrichtung des Materials vor dem Düsenbauteil angeordnetes Verteilerbauteil zum Zuführen des mindestens einen thermoplastischen Materialstromes zu dem Düsenbauteil aufweist.
